# EUROPEAN PATENT SPECIFICATION

(11) **EP 3 284 607 B1**
(45) Date of publication and mention of the grant of the patent: **15.01.2020**
(21) Application number: 15888849.5
(22) Date of filing: 21.04.2015
(51) Int. Cl.: B41M 3/14, B42D 25/324

(54) **PATTERN FOR ENHANCING DYNAMIC OPTICAL VARIABLE ANTI-COUNTERFEITING EFFECT AND MANUFACTURING METHOD THEREFOR**
MUSTER ZUR ERHÖHUNG DES DYNAMISCHEN OPTISCHEN VARIABLEN FÄLSCHUNGSSICHEREN EFFEKTS UND HERSTELLUNGSVERFAHREN DAFÜR
MOTIF POUR L'AMÉLIORATION D'UN EFFET OPTIQUE VARIABLE DYNAMIQUE ANTI-CONTREFAÇON ET SON PROCÉDÉ DE FABRICATION

(30) Priority: 17.04.2015 CN 201510185889
(43) Date of publication of application: 21.02.2018
(73) Proprietor: CHINA BANKNOTE INK CO., LTD., Pudong New Area Shanghai 201315 (CN); CHINA BANKNOTE PRINTING AND MINTING CORPORATION, Xicheng District Beijing 100044 (CN)
(72) Inventor: ZHANG, Xing, Shanghai 201315 (CN); MENG, Qingfei, Shanghai 201315 (CN); ZHANG, Yong, Shanghai 201315 (CN); ZHOU, Xiaoquan, Shanghai 201315 (CN); YUAN, Guolin, Shanghai 201315 (CN); ZHANG, Shifan, Shanghai 201315 (CN)
(74) Representative: Herrero & Asociados, S.L.
(86) International application number: PCT/CN2015/077038
(87) International publication number: WO 2016/165145

(56) References cited:
- WO-A1-2005/080089
- AU-B3- 698 312
- CN-A- 1 830 692
- CN-A- 102 602 184
- CN-A- 103 895 374
- DE-A1-102011 016 050
- JP-A- 2000 203 147
- US-A- 4 033 059

## Description

### Background of the Present Invention

### Field of Invention

The present invention relates to an anti-counterfeiting pattern and a preparation method thereof, and particularly relates to an enhanced dynamic optically variable anti-counterfeiting pattern and a preparation method thereof, which belongs to the anti-counterfeiting printing field.

### Description of Related Arts

The engraving gravure invisible pattern technology has been widely used in the banknote printing industry, and has become a popular readily identifiable anti-counterfeiting technology. Generally, the line number of the pattern of invisible part is identical to that of the pattern of visible part, with a texture comparison arrangement of 45-90 degree. However, in recent years, more generally, the engraving gravure is overprinted with an offset printing accurate design, wherein the engraving gravure is inkless blind embossing. Therefore, when rotationally observing, a gray level or optically variable effect is generated due to the angle changes between a highlight line of the pattern and the shadow thereof, but no dynamic effect.

A Chinese invention patent, with an application No. 200610020757.2, provides an invisible anti-counterfeiting pattern capable of generating dynamically variable engraving gravure, however, the pattern consists of parallel lines instead of curve structure, thereby it is unable to generate a dynamic color shifting effect.

A Chinese patent CN201310534864 provides an invisible anti-counterfeiting pattern capable of generating variable color for an engraving gravure. However, the pattern should be accurately overprinted with other graphic pattern (e.g., offset print), which has high requirement on the overprinting device, poor uniformity of the generating optical variation, and is unfavorable for wide application, particularly is limited in the application of banknotes, and has insufficient public identifiability.

A Chinese patent CN1262430 provides a data carrier having an optically variable structure, wherein the structure is combined by an engraving gravure relief structure and an overprinted print form, such that a part of the print form is visible when vertically viewing, and is invisible when obliquely viewing. Thereby, when alternately viewing vertically and obliquely, an oblique effect is generated, but no dynamic optically color changing effect when rotates.

In the known optically variable anti-counterfeiting print design, basically the offset line printing is disposed on the blind embossed side part, with the result of obvious comparison or oblique effect, but narrow optical color changing visual angle. Thus it requires for finding out an accurate observation angle, which is not suitable for quick observation. Besides, the optically variable effect is discontinuous and has no dynamic change. Document DE 10 2011 016 050 A1 discloses a pattern according to the preamble of claim 1.

### Summary of the Present Invention

In view of the above problems, the present invention provides a pattern according to claim 1 and a method according to claim 5, to solve the disadvantages in the prior art.

The full-page colored print form is lithography print form, a silk-screen print form or an engraving gravure print form or print form achieved by other ways.

The colored print form having high narrow stereoscopic lines is preferably an engraving gravure print form.

The interval of the lines is 100-300% times of the width of the lines, and the height of the lines is 10-100% times of the width of the lines.

Preferably, the width of the lines is 0. 03-0. 3mm.

The color of the colored print form having high narrow stereoscopic lines is a complementary color of the color of the full-page colored print form in a color gamut space, or is visually significant different with the color of the full-page colored print form. The complementary color in the color gamut space is detailedly defined in the ink technology handbook, and any color pair of visually significant difference includes but is not limited to: yellow and red, yellow and violet, red and blue, yellow and green, red and white. The overprinting combination of two colored print forms causes a continuous and dynamic optically variable effect when the whole overprinting area is rotated along with the view angle. The anti-counterfeiting pattern having the above structure may realize a continuous optically variable effect when inclining or rotating a printed product, i.e., generate a distinct color changing effect when inclining 50-90 degree, and generate a color shifting effect when horizontal-rotating, which is extremely readily to identify.

The preparation method of the pattern with an enhanced dynamic optically variable anti-counterfeiting effect comprises the following steps of:
(1) performing a lithography print form, a silk-screen print form or an engraving gravure print form or print forms achieved by other ways on a printing carrier, such as a paper or plastic film, for example, the print may be an offset print, pad print, engraving gravure print or silk-screen print, and the graphic pattern is a full-page colored print;
(2) overprinting colored ink lines on the full-paged graphic pattern of lithography print or silk-screen print or engraving gravure print by using engraving gravure printing, wherein the colored ink has a complementary color of the printed color in step (1) in a color gamut space or of visually significant difference of the printed color in step (1), so as to obtain the pattern with the enhanced dynamic optically variable anti-counterfeiting effect.

In the design of the combined lines of the engraving gravure print, a fine pattern of a secret mark or specific graphic pattern for improving the wiping property may be added as needed.

As compared to the prior art, the present invention has the prominent technical effects that: an unique print color structure is formed by color overprinting of the two printing types and by contrasting color overprinting effect of the engraving gravure high narrow stereoscopic lines and the full-page colored print form. Thereby, it is realizable to generate a continuous optically variable effect when inclining or rotating a printed product, i.e., generate a distinct color changing effect when inclining, and a strong color shifting effect when horizontal-rotating, which is visual, readily to identify, anti-copying and difficult to forgery. The present invention enables to avoid a technology barrier of similar accurate overprinting technology, and is suitable for industrial application. The dynamic optically variable anti-counterfeiting pattern and the preparation method thereof can be applied in the anti-counterfeiting of securities.

### Brief Description of the Drawings

Figure 1 is a front view of a dynamic optically variable anti-counterfeiting concentric circle pattern.
Figure 2 is a visual view of figure 1 with an inclined angle of 60 degree.
Figure 3 is a visual view of figure 2 with a horizontal-rotation of 90 degree.

### Detailed Description of the Preferred Embodiments

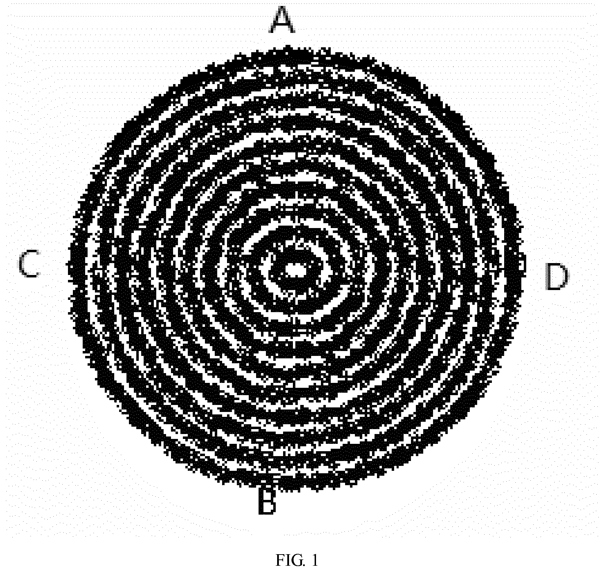

Please refer to figure 1, an anti-counterfeiting pattern with an enhanced dynamic optically variable anti-counterfeiting effect consists of a full-page colored print form 1 and a colored print form having high narrow stereoscopic lines 2, wherein the colored print form having high narrow stereoscopic lines 2 is overprinted on the full-page colored print form 1. As for the colored print form 2, the interval of the lines is 100-300% times of the width of the lines, and the height of the lines is 10-100% times of the width of the lines.

### Embodiment 1

Hereinafter, the present invention will be described by taken concentric circles as a graphic pattern as an example.

Figure 1 is shown to a dynamic optically variable anti-counterfeiting concentric circle pattern, the preparation method of which is as below:
(1) adopting the offset printing to obtain a full-page colored print form 1, herein the graphic pattern is full-page yellow circles;
(2) adopting the engraving gravure to print the colored ink print, wherein the pattern is concentric circles, which overprints on the lithographic yellow circles, to obtain the colored print form 2 having high narrow stereoscopic lines; herein the ink of the engraving gravure is red;
(3) the high narrow stereoscopic lines of the red gravure print concentric circles has a width of 0.1mm, a height of 0.06mm, and an interval therebetween of 0.1mm; the ABCD areas in figure 1 have uniform front color and vision.

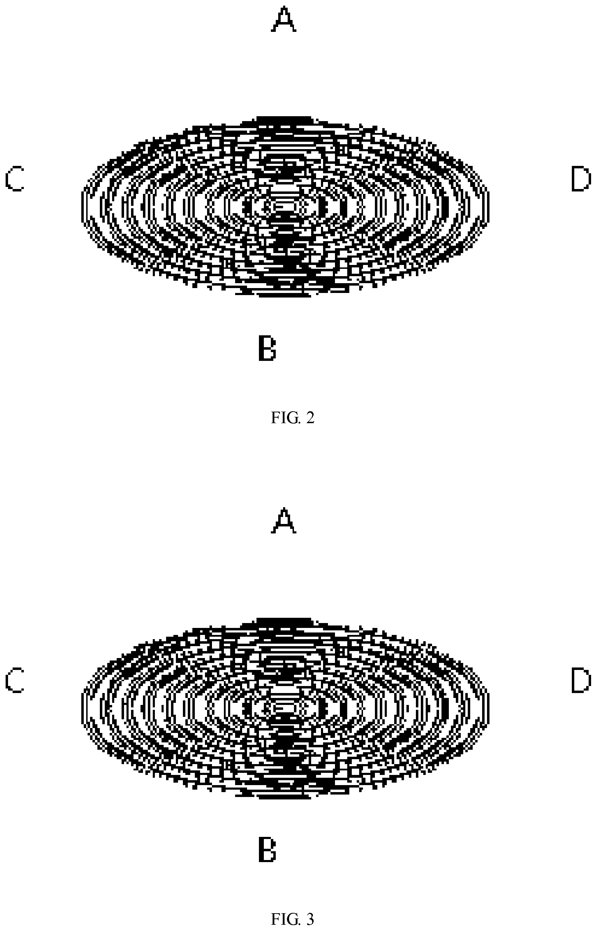

In the embodiment, the enhanced dynamic optically variable effect is as below: figure 2 is a visual view of figure 1 with an inclined angle of 60 degree, wherein areas A and B change to red of engraving gravure high narrow stereoscopic lines, while areas C and D are golden yellow by mixing the colors of the offset print shading and the engraving gravure, that is, areas A , B and areas C, D have contrasting colors. When figure 2 horizontal-rotates, a continuous dynamic optically variable effect is generated.

Figure 3 is a visual view of figure 2 with a horizontal-rotation of 90 degree, wherein areas A and B are shifted from red in figure 2 to golden yellow, while areas C and D are shifted from golden yellow to red.

## Claims

1. A pattern with an enhanced dynamic optically variable anti-counterfeiting effect, consisting of a full-page colored print form and a colored print form having high narrow stereoscopic lines, wherein the colored print form having high narrow stereoscopic lines is overprinted on the full-page colored print form;
the colored print form having high narrow stereoscopic lines has a shape of combined lines; the interval of the lines is 100-300% times of the width of the lines, and the height of the lines is 10-100% times of the width of the lines;
the color of the colored print form having high narrow stereoscopic lines is a complementary color of the color of the full-page colored print form in a color gamut space, or is visually significant different with the color of the full-page colored print form, **characterised in that**
the combined lines are curve lines of concentric circle structure.

2. The pattern according to claim 1, **characterized in that**, the full-page colored print form is lithography print form, a silk-screen print form or an engraving gravure print form or print form achieved by other ways; the colored print form having high narrow stereoscopic lines is an engraving gravure print form.

3. The pattern according to claim 1, **characterized in that**, the width of the lines is 0. 03-0. 3mm.

4. The pattern according to anyone of claims 1-3, **characterized in that**, any color pair of visually significant difference includes but is not limited to: yellow and red, yellow and violet, red and blue, yellow and green, red and white.

5. A preparation method of the pattern according to anyone of claims 1-4, comprising the following steps of:
(1) performing a lithography print form, a silk-screen print form or an engraving gravure print form or print forms achieved by other ways on a printing carrier, such as a paper or plastic film, for example, the print may be an offset print, pad print, engraving gravure print or silk-screen print, and the graphic pattern is a full-page colored print;
(2) overprinting colored ink lines on the full-paged graphic pattern of lithography print or silk-screen print or engraving gravure print by using engraving gravure printing, wherein the colored ink has a complementary color of the printed color in step (1) in a color gamut space or of visually significant difference of the printed color in step (1), so as to obtain the pattern with the enhanced dynamic optically variable anti-counterfeiting effect.

## Patentansprüche

1. Muster mit einem erhöhten dynamischen optisch variablen fälschungssicheren Effekt, das aus einem ganzseitigen Farbdruckbild und einem Farbdruckbild besteht, das hohe, schmale, stereoskopische Linien aufweist, wobei das Farbdruckbild, das hohe, schmale, stereoskopische Linien aufweist, auf das ganzseitige Farbdruckbild aufgedruckt wird;
das Farbdruckbild, das hohe, schmale, stereoskopische Linien aufweist, eine Form von kombinierten Linien aufweist;
der Abstand der Linien 100-300 % der Breite der Linien ist und die Höhe der Linien 10-100 % der Breite der Linien ist;
die Farbe des Farbdruckbilds, das hohe, schmale, stereoskopische Linien aufweist, eine Komplementärfarbe der Farbe des ganzseitigen Farbdruckbilds in einem Farbraum ist, oder sich visuell erheblich von der Farbe des ganzseitigen Farbdruckbilds unterscheidet, **dadurch gekennzeichnet, dass** die kombinierten Linien Kurvenlinien von der Struktur eines konzentrischen Kreises sind.

2. Muster nach Anspruch 1, **dadurch gekennzeichnet, dass** das ganzseitige Farbdruckbild ein Flachdruckbild, ein Siebdruckbild oder ein Gravurtiefdruckbild oder ein auf andere Weise realisiertes Druckbild ist; wobei das Farbdruckbild, das hohe, schmale, stereoskopische Linien aufweist, ein Gravurtiefdruckbild ist.

3. Muster nach Anspruch 1, **dadurch gekennzeichnet, dass** die Breite der Linien 0,03-0,3 mm beträgt.

4. Muster nach einem der Ansprüche 1 bis 3, **dadurch gekennzeichnet, dass** ein beliebiges Farbpaar mit visuell erheblichem Unterschied Folgendes umfasst, aber nicht darauf beschränkt ist: Gelb und Rot, Gelb und Violett, Rot und Blau, Gelb und Grün, Rot und Weiß.

5. Herstellungsverfahren des Musters nach einem der Ansprüche 1 bis 4, umfassend die folgenden Schritte:
(1) Ausführen eines Flachdruckbilds, eines Siebdruckbilds oder eines Gravurtiefdruckbilds oder von Druckbildern, die auf andere Weise realisiert werden, auf einem Druckträger, wie einem Papier oder Kunststofffolie, beispielsweise kann der Druck ein Offsetdruck, Tampondruck, Gravurtiefdruck oder Siebdruck sein, und das grafische Muster ist ein ganzseitiger Farbdruck;
(2) Aufdrucken von Farbtintenlinien auf das ganzseitige grafische Flachdruck- oder Siebdruck- oder Gravurtiefdruck-Muster unter Verwendung von Gravurtiefdruck, wobei die Farbtinte eine Komplementärfarbe der in Schritt (1) gedruckten Farbe in einem Farbraum aufweist oder von visuell erheblichem Unterschied zu der in Schritt (1) gedruckten Farbe ist, um das Muster mit dem erhöhten dynamischen optisch variablen fälschungssicheren Effekt zu erhalten.

## Revendications

1. Motif avec un effet anti-contrefaçon variable optiquement dynamique amélioré, se composant d'une forme imprimée colorée sur une page entière et une forme imprimée colorée présentant des lignes stéréoscopiques hautes et étroites, dans lequel la forme imprimée colorée présentant des lignes stéréoscopiques hautes et étroites est surimprimée sur la forme imprimée colorée sur une page entière ;
la forme imprimée colorée présentant des lignes stéréoscopiques hautes et étroites présente une forme de lignes combinées ;
l'intervalle des lignes est de 100 à 300 % fois la largeur des lignes, et la hauteur des lignes est de 10 à 100 % fois la largeur des lignes ;
la couleur de la forme imprimée colorée présentant des lignes stéréoscopiques hautes et étroites est une couleur complémentaire de la couleur de la forme imprimée colorée sur une page entière dans un espace de palette de couleur, ou est visuellement différente de manière significative de la couleur de la forme imprimée colorée sur une page entière, **caractérisé en ce que**
les lignes combinées sont des lignes courbes de structure de cercle concentrique.

2. Motif selon la revendication 1, **caractérisé en ce que** la forme imprimée colorée sur une page entière est une forme imprimée par lithographie, une forme imprimée par sérigraphie ou une forme imprimée par gravure en creux ou une forme imprimée obtenue d'autres manières ; la forme imprimée colorée présentant des lignes stéréoscopiques hautes et étroites est une forme imprimée par gravure en creux.

3. Motif selon la revendication 1, **caractérisé en ce que** la largeur des lignes est de 0,03 à 0,3 mm.

4. Motif selon l'une quelconque des revendications 1 à 3, **caractérisé en ce que** toute paire de couleur de différence visuellement significative inclut mais n'est pas limitée à : jaune et rouge, jaune et violet, rouge et bleu, jaune et vert, rouge et blanc.

5. Procédé de préparation du motif selon l'une quelconque des revendications 1 à 4, comprenant les étapes suivantes de :
(1) la réalisation d'une forme imprimée par lithographie, une forme imprimée par sérigraphie ou une forme imprimée par gravure en creux ou des formes imprimées obtenues d'autres manières sur un support d'impression, tel qu'une feuille de papier ou plastique, par exemple, l'impression peut être une impression offset, tampographie, impression par gravure en creux ou impression par sérigraphie, et le motif graphique est une impression colorée sur une page entière ;
(2) la surimpression de lignes d'encre colorée sur le motif graphique sur une page entière d'impression par lithographique ou impression par sérigraphie ou impression par gravure en creux par utilisation d'impression par gravure en creux, dans lequel l'encre colorée présente une couleur complémentaire de la couleur imprimée à l'étape (1) dans un espace de palette de couleur ou de différence visuellement significative de la couleur imprimée à l'étape (1), de sorte à obtenir le motif avec l'effet anti-contrefaçon variable optiquement dynamique amélioré.
